# EUROPEAN PATENT APPLICATION

(11) **EP 4 647 327 A1**
(43) Date of publication of application: **12.11.2025**
(21) Application number: 25174926.3
(22) Date of filing: 08.05.2025
(51) Int. Cl.: B62J 9/10, B62J 11/00, B62J 45/00, B62K 19/16, B62K 19/40

(54) **WIRELESS CHARGING DEVICE FOR CARBON FIBER ELECTRIC BICYCLE**

(30) Priority: 11.05.2024 CN 202421019482 U
(71) Applicant: Haikou Wuxian Cycling Technology Co., Ltd., Haikou, Hainan (CN)
(72) Inventor: LIU, Quan, Haikou (CN)
(74) Representative: Metida

(57) **Abstract**

The present invention discloses a wireless charging device for a carbon fiber electric bicycle. The wireless charging device includes a bicycle frame (1), a sealed accommodating box (2), a wireless charging module (3), a sealing cover (4), a partition plate (5) and a power supply device (6), where an accommodating hole (11) is provided in an upper end of the bicycle frame (1); a top of the sealed accommodating box (2) is provided with an opening and provided with a flange (21), and the sealed accommodating box (2) is embedded in the accommodating hole (11); the power supply device (6) is installed on the bicycle frame (1); the wireless charging module (3) is installed in the sealed accommodating box (2) and electrically connected to the power supply device (6); and the sealing cover (4) is positioned at the opening of the sealed accommodating box (2). According to the present invention, the wireless charging module (3) is embedded into the bicycle frame (1) through the sealed accommodating box (2) and electrically connected to the power supply device (6) of the electric bicycle, so that the electric bicycle can be charged during riding. Additionally, the sealing cover (4) is provided to implement the clamping, fixing and sealing of a mobile phone, thereby solving a problem of mobile phone charging during riding, and preventing the mobile phone from falling while charged. The wireless charging device has a waterproof and sealing effect and is convenient to use.

## Description

### FIELD OF TECHNOLOGY

The present invention relates to the technical field of bicycles, and in particular, to a wireless charging device for a carbon fiber electric bicycle.

### BACKGROUND

Most of the existing mobile phone charging devices charge mobile phones with a cable-based charger. When riding bicycles outdoors, people need to use the mobile phone to navigate a route and often have problems such as mobile phone endurance depletion due to the insufficient battery power of the mobile phone. People either carry supplementary power banks or interrupt their journey to locate charging stations, causing significant inconvenience.

There are also bicycles with wireless charging function in the market. For example, the utility model patent with publication number of CN207098731U discloses a bicycle with a wireless charging device for mobile phones. The wireless charger has a wireless transmit end and a wireless receive end, and the wireless transmit end is configured as a solar charger, and the wireless receive end is configured as a wireless charger for charging mobile phones. The wireless charger is installed on a handlebar and the solar charger is installed in a bicycle basket. In the patent, the solar charger needs to be installed in the bicycle basket. In rainy days, a rain cover needs to be sleeved to seal the solar charger. When the wireless charger is used to charge the mobile phone, the mobile phone still has the risk of water ingress due to the absence of a sealing structure, so the wireless charger is relatively inconvenient to use.

### SUMMARY

The present invention is to overcome the above disadvantages in the prior art, and provides a wireless charging device for a carbon fiber electric bicycle. The wireless charging device can solve a problem of mobile phone charging and clamping during riding, and has waterproof and sealing effect and is convenient and quick to use.

To implement the above-mentioned purpose, the present invention provides a wireless charging device for a carbon fiber electric bicycle. The wireless charging device includes a bicycle frame, a sealed accommodating box for placing a mobile phone, a wireless charging module for charging the mobile phone, a sealing cover, a partition plate and a power supply device, where an accommodating hole is provided in an upper end of the bicycle frame; a top of the sealed accommodating box is provided with an opening, an edge of the opening thereof is provided with a flange, the sealed accommodating box is embedded in the accommodating hole, and the flange abuts against a top edge of the accommodating hole; the partition plate is fixed above an inner end face of the sealed accommodating box; the power supply device is installed on the bicycle frame; the wireless charging module is installed in the sealed accommodating box, positioned below the partition plate, and electrically connected to the power supply device through a lead wire; and the sealing cover is positioned at the opening of the sealed accommodating box, one end of the sealing cover is rotatably connected to one end of the sealed accommodating box through a rotating connector and is capable of being turned over and opened around a connecting part between the sealing cover and the sealed accommodating box.

Preferably, the bicycle frame includes an upper tube, a lower tube and a seat tube, where the lower tube is obliquely connected between the upper tube and the seat tube, and the upper tube, the lower tube and the seat tube together form a triangular structure; and the accommodating hole is provided in a top surface of the upper tube.

Preferably, the upper tube and the lower tube are internally hollow and interconnected, a battery chamber is formed in the lower tube, the accommodating hole is interconnected to the battery chamber, and the power supply device is installed in the battery chamber and configured as a lithium battery.

Preferably, a circular groove for installing the wireless charging module is recessed downward in an inner bottom surface of the sealed accommodating box, and a through hole interconnected to the battery chamber is provided in an inner wall of the circular groove.

Preferably, the wireless charging module is configured as a wireless charging coil.

Preferably, a battery outlet is provided outside the lower tube, and the battery outlet is movably provided with a lock housing at an opening thereof, a rotating lock is installed on the lock housing, and the lock housing is capable of opening and closing the battery outlet through the rotating lock.

Preferably, the rotating connector includes a connecting base, a rotating shaft and a rotating shaft hole, where the connecting base is provided in two, and the two connecting bases are oppositely provided at one end of the sealing cover, the rotating shaft is horizontally connected to outer side walls of the two connecting bases respectively, the flange at one end of the sealed accommodating box is provided with two limit open slots for clamping the corresponding connecting base and the rotating shaft, the rotating shaft hole is provided in inner sides walls corresponding to the two limit open slots respectively, and the rotating shaft is rotatably fitted with the rotating shaft hole, so that opening and closing of the sealing cover in relation to the sealed accommodating box are implemented.

Preferably, the sealed accommodating box is provided with an arc-shaped groove extending outward from the middle of the flange at another end thereof.

Preferably, the sealed accommodating box is made of plastic.

Preferably, the bicycle frame is made of carbon fiber.

Compared with the prior art, the beneficial effects of the present invention lie in that:
The wireless charging device of the present invention has simple structure and reasonable design. The wireless charging module is embedded into the bicycle frame through the sealed accommodating box and electrically connected to the power supply device of the electric bicycle, so that the electric bicycle can be charged during riding, without being charged by external devices including power banks. Additionally, the sealing cover is provided to implement the clamping, fixing and sealing of a mobile phone, thereby solving a problem of mobile phone charging when a rider rides the electric bicycle, and effectively preventing the mobile phone from falling while charged. Meanwhile, the wireless charging device further has a waterproof and sealing effect and is convenient to use.

### BRIEF DESCRIPTION OF THE DRAWINGS

In order to more clearly explain embodiments of the present invention or the technical solution in the prior art, the accompanying drawings needed in the descriptions of the embodiments or the prior art will be briefly introduced below. Apparently, the accompanying drawings in the following descriptions are some embodiments of the present invention. Other accompany drawings also may be obtained by ordinary persons skilled in the art based on these drawings without any creative labor.
FIG. 1 is a schematic structural diagram of a wireless charging device for a carbon fiber electric bicycle provided by an embodiment of the present invention;
FIG. 2 is a first exploded schematic diagram of a partial structure of a wireless charging device for a carbon fiber electric bicycle provided by an embodiment of the present invention;
FIG. 3 is a second exploded schematic diagram of a partial structure of a wireless charging device for a carbon fiber electric bicycle provided by an embodiment of the present invention;
FIG. 4 is a third exploded schematic diagram of a partial structure of a wireless charging device for a carbon fiber electric bicycle provided by an embodiment of the present invention;
FIG. 5 is a fourth exploded schematic diagram of a partial structure of a wireless charging device for a carbon fiber electric bicycle provided by an embodiment of the present invention; and
FIG. 6 is a schematic diagram of an opening state of a sealing cover of a wireless charging device for a carbon fiber electric bicycle provided by an embodiment of the present invention.

### DESCRIPTION OF THE EMBODIMENTS

In order to make the purpose, technical solution and advantages of the embodiments of the present invention more clear, the technical solution in the embodiments of the present invention will be described clearly and completely with reference to the accompanying drawings. Apparently, the described embodiments are only some embodiments of the present invention but not all embodiments thereof. All other embodiments, obtained by ordinary persons skilled in the art based on the embodiments of the present invention without any creative labor, fall within the scope of protection of the present invention.

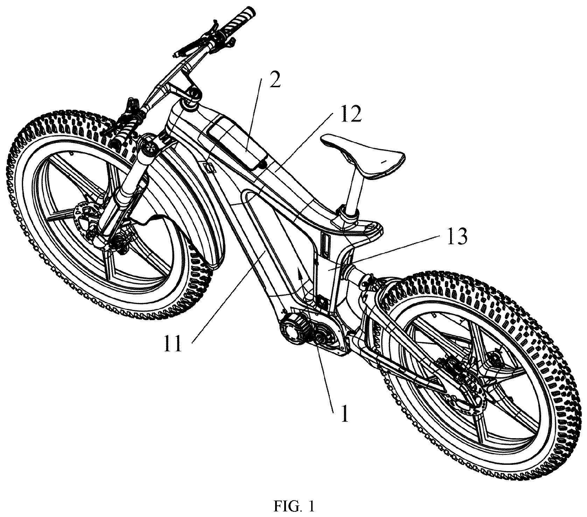

Refer to FIG. 1. An embodiment of the present invention provides a wireless charging device for a carbon fiber electric bicycle, and the wireless charging device includes a bicycle frame 1, a sealed accommodating box 2 for placing a mobile phone, a wireless charging module 3 for charging the mobile phone, a sealing cover 4, a partition plate 5, a power supply device 6 and other components. Each component in the embodiment will be described in detail with reference to the accompanying drawings.

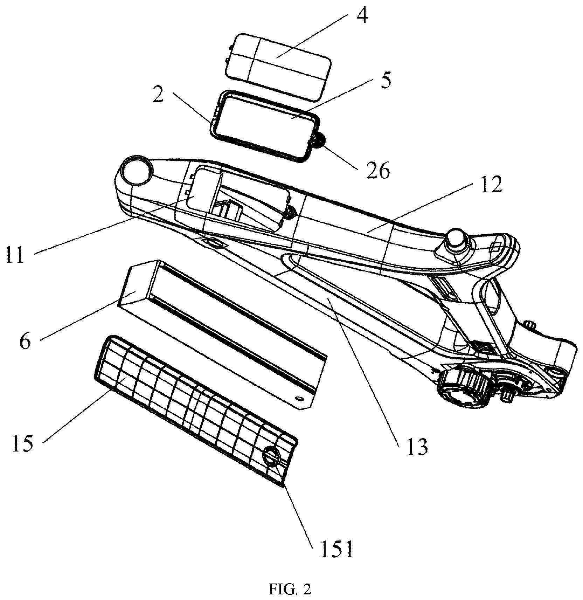

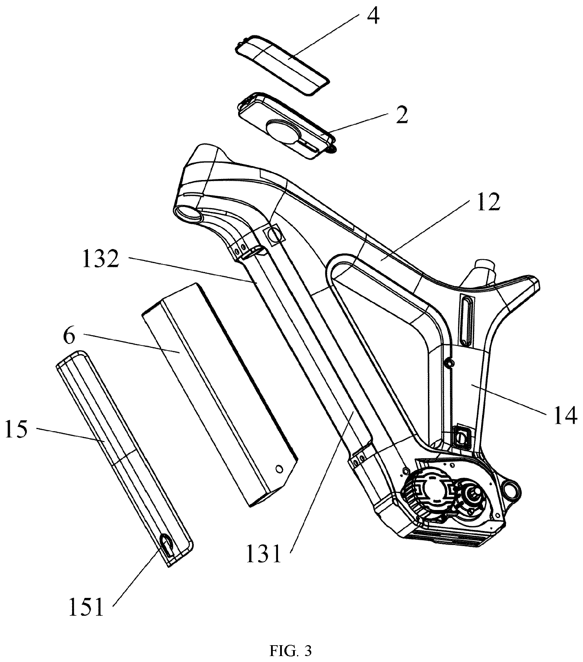

As shown in FIG. 1 to FIG. 3, an upper end of the bicycle frame 1 may be provided with an accommodating hole 11 to enable the power supply device 6 to be installed on the bicycle frame 1, the bicycle frame 1 includes an upper tube 12, a lower tube 13 and a seat tube 14, where the lower tube 13 is obliquely connected between the upper tube 12 and the seat tube 14, and the upper tube 12, the lower tube 13 and the seat tube 14 together form a triangular structure; and the accommodating hole 11 is provided in a top surface of the upper tube 12.

Specifically, the upper tube 12 and the lower tube 13 are internally hollow and interconnected, a battery chamber 131 is formed in the lower tube 13, the accommodating hole 11 is interconnected to the battery chamber 131, and the power supply device 6 is installed in the battery chamber 131 and preferably configured as a lithium battery.

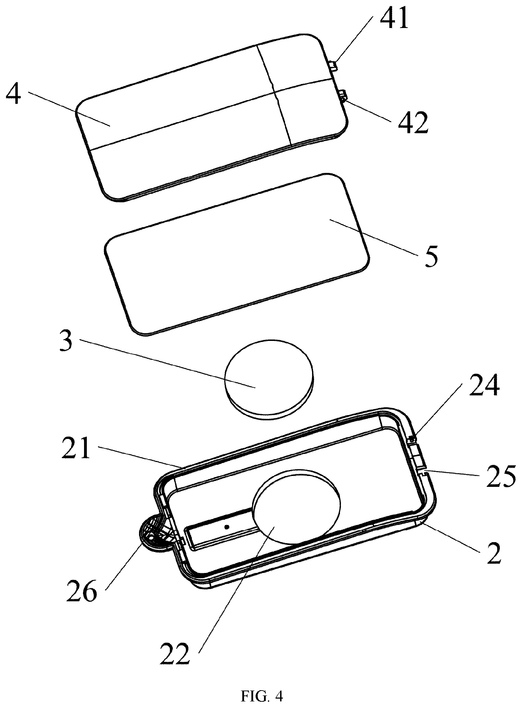

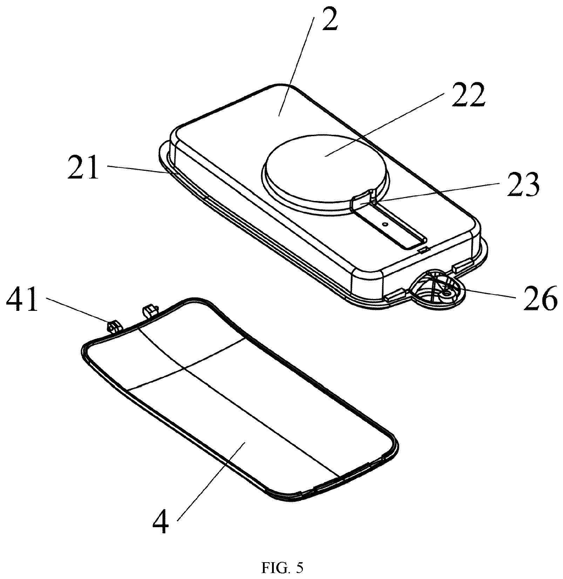

As shown in FIG. 4 and FIG. 5, a top of the sealed accommodating box 2 may be provided with an opening, an edge of the opening thereof is provided with a flange 21, the sealed accommodating box 2 is embedded in the accommodating hole 11, and the flange 21 abuts against a top edge of the accommodating hole 11; the partition plate 5 is fixed above an inner end face of the sealed accommodating box 2; and the sealing cover 4 is positioned at the opening of the sealed accommodating box 2, one end of the sealing cover 4 is rotatably connected to one end of the sealed accommodating box 2 through a rotating connector and is capable of being turned over and opened around a connecting part between the sealing cover and the sealed accommodating box 2.

In a specific implementation, the upper tube 12 is positioned at the direct line of sight of a rider and within the arm's reach of the rider, which can facilitate the rider to view and access the mobile phone in the sealed accommodating box 2.

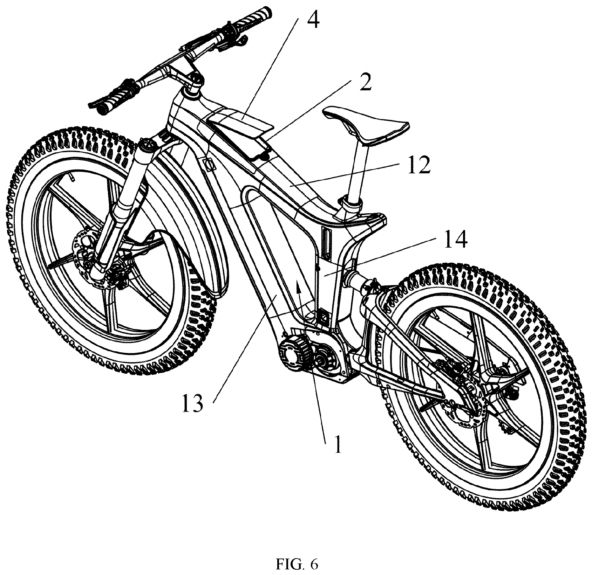

As shown in FIG. 6 in order to help a user to open the sealing cover 4, the sealed accommodating box 2 is provided with an arc-shaped groove 26 extending outward from the middle of the flange 21 at another end thereof.

Preferably, the sealed accommodating box 2 may be made of plastic. The sealed accommodating box 2 and the sealing cover 4 together form a sealing structure, which ensures the wireless charging of the mobile phone and prevents the mobile phone from getting wet with water in rainy weather.

Specifically, the rotating connector may include a connecting base 41, a rotating shaft 42 and a rotating shaft hole 24, where the connecting base 41 is provided in two, and the two connecting bases are oppositely provided at one end of the sealing cover 4, the rotating shaft 42 is horizontally connected to outer side walls of the two connecting bases 41 respectively, the flange 21 at one end of the sealed accommodating box 2 is provided with two limit open slots 25 for clamping the corresponding connecting base 41 and the rotating shaft 42, the rotating shaft hole 24 is provided in inner sides walls corresponding to the two limit open slots 25 respectively.

In implementation, the rotating shaft 42 is rotatably fitted with the rotating shaft hole 24, so that opening and closing of the sealing cover 4 in relation to the sealed accommodating box 2 is implemented.

In the embodiment, the wireless charging module 3 may be installed in the sealed accommodating box 2 and below the partition plate 5, and the wireless charging module 2 is electrically connected to the power supply device 6 through a lead wire. A circular groove 22 for installing the wireless charging module 3 is recessed downward in an inner bottom surface of the sealed accommodating box 2, and a through hole 23 interconnected to the battery chamber 131 is provided in an inner wall of the circular groove 22.

The wireless charging module 3 is configured as a wireless charging coil. A wireless charging coil is embodiment in the circular groove 22, so that the size of the wireless charging module 3 may be designed in different specifications according to the conventional size of a mobile phone to satisfy the wireless charging requirements for mobile phones with different specifications. It should be noted that the structure, function and the like of the wireless charging module 3 are all well-known techniques in the field of wireless power transmission, and can be reproduced according to the prior art. This will not be described in detail.

More preferably, a battery outlet 132 may be provided outside the lower tube 13, and the battery outlet 132 is movably provided with a lock housing 15 at an opening thereof, a rotating lock 151 is installed on the lock housing 15, and the lock housing 15 is capable of opening and closing the battery outlet 132 through the rotating lock 151.

In the embodiment, the bicycle frame 1 may be made of carbon fiber, where the carbon fiber frame is very light and has the advantages of good rigidity and impact absorptivity.

In conclusion, according to the present invention, the wireless charging module is embedded into the bicycle frame through the sealed accommodating box and electrically connected to the power supply device of the electric bicycle, so that the electric bicycle can be charged during riding, without being changed by external devices including power banks. Additionally, the sealing cover is provided to implement the clamping, fixing and sealing of a mobile phone, thereby solving a problem of mobile phone charging when a rider rides the electric bicycle, and effectively preventing the mobile phone from falling while charged. Meanwhile, the wireless charging device further has a waterproof and sealing effect and is convenient to use.

The above-mentioned embodiment is the preferred embodiment of the present invention, but the embodiments of the present invention are not limited by the above-mentioned embodiment. Any other alterations, modifications, substitutions, combinations and simplifications made without departing from the spirit and principle of the present invention shall be equivalent substitutions and all fall within the scope of protection of the present invention.

## Claims

1. A wireless charging device for a carbon fiber electric bicycle, **characterized by** comprising: a bicycle frame (1), a sealed accommodating box (2) for placing a mobile phone, a wireless charging module (3) for charging the mobile phone, a sealing cover (4), a partition plate (5) and a power supply device (6), wherein an accommodating hole (11) is provided in an upper end of the bicycle frame (1); a top of the sealed accommodating box (2) is provided with an opening, an edge of the opening thereof is provided with a flange (21), the sealed accommodating box (2) is embedded in the accommodating hole (11), and the flange (21) abuts against a top edge of the accommodating hole (11); the partition plate (5) is fixed above an inner end face of the sealed accommodating box (2); the power supply device (6) is installed on the bicycle frame (1); the wireless charging module (3) is installed in the sealed accommodating box (2), positioned below the partition plate (5), and electrically connected to the power supply device (6) through a lead wire; and the sealing cover (4) is positioned at the opening of the sealed accommodating box (2), one end of the sealing cover (4) is rotatably connected to one end of the sealed accommodating box (2) through a rotating connector and is capable of being turned over and opened around a connecting part between the sealing cover and the sealed accommodating box (2).

2. The wireless charging device for a carbon fiber electric bicycle according to claim 1, **characterized in that** the bicycle frame (1) comprises an upper tube (12), a lower tube (13) and a seat tube (14), wherein the lower tube (13) is obliquely connected between the upper tube (12) and the seat tube (14), and the upper tube (12), the lower tube (13) and the seat tube (14) together form a triangular structure; and the accommodating hole (11) is provided in a top surface of the upper tube (12).

3. The wireless charging device for a carbon fiber electric bicycle according to claim 2, **characterized in that** the upper tube (12) and the lower tube (13) are internally hollow and interconnected, a battery chamber (131) is formed in the lower tube (13), the accommodating hole (11) is interconnected to the battery chamber (131), and the power supply device (6) is installed in the battery chamber (131) and configured as a lithium battery.

4. The wireless charging device for a carbon fiber electric bicycle according to claim 3, **characterized in that** a circular groove (22) for installing the wireless charging module (3) is recessed downward in an inner bottom surface of the sealed accommodating box (2), and a through hole (23) interconnected to the battery chamber (131) is provided in an inner wall of the circular groove (22).

5. The wireless charging device for a carbon fiber electric bicycle according to claim 1, **characterized in that** the wireless charging module (3) is configured as a wireless charging coil.

6. The wireless charging device for a carbon fiber electric bicycle according to claim 3, **characterized in that** a battery outlet (132) is provided outside the lower tube (13), and the battery outlet (132) is movably provided with a lock housing (15) at an opening thereof, a rotating lock (151) is installed on the lock housing (15), and the lock housing (15) is capable of opening and closing the battery outlet (132) through the rotating lock (151).

7. The wireless charging device for a carbon fiber electric bicycle according to claim 1, **characterized in that** the rotating connector comprises a connecting base (41), a rotating shaft (42) and a rotating shaft hole (24), wherein the connecting base (41) is provided in two, and the two connecting bases are oppositely provided at one end of the sealing cover (4), the rotating shaft (42) is horizontally connected to outer wall sides of the two connecting bases (41) respectively, the flange (21) at one end of the sealed accommodating box (2) is provided with two limit open slots (25) for clamping the corresponding connecting base (41) and the rotating shaft (42), the rotating shaft hole (24) is provided in inner side walls corresponding to the two limit open slots (25) respectively, and the rotating shaft (42) is rotatably fitted with the rotating shaft hole (24), so that opening and closing of the sealing cover (4) in relation to the sealed accommodating box (2) is implemented.

8. The wireless charging device for a carbon fiber electric bicycle according to claim 1, **characterized in that** the sealed accommodating box (2) is provided with an arc-shaped groove (26) extending outward from the middle of the flange (21) at another end thereof.

9. The wireless charging device for a carbon fiber electric bicycle according to claim 1, **characterized in that** the sealed accommodating box (2) is made of plastic.

10. The wireless charging device for a carbon fiber electric bicycle according to claim 1, **characterized in that** the bicycle frame (1) is made of carbon fiber.
